Europäisches Patentamt

**European Patent Office**

**Office européen des brevets**

(11) Numéro de publication: **0 019 556**

**A1**

## (12) DEMANDE DE BREVET EUROPEEN

(21) Numéro de dépôt: **80400688.0**

(22) Date de dépôt: **19.05.80**

(51) Int. Cl.³: **B 60 J 1/02**
**B 60 J 1/20**

(30) Priorité: **17.05.79 FR 7912551**

(43) Date de publication de la demande:
**26.11.80 Bulletin 80/24**

(84) Etats Contractants Désignés:
**AT BE CH DE GB IT LI LU NL SE**

(71) Demandeur: **Bonnet, Albert Lucien Léon**
**12, rue Saisset**
**F-92120 Montrouge(FR)**

(72) Inventeur: **Leclere, Fred**
**50, rue Victor Hugo**
**92 Montrouge(FR)**

(74) Mandataire: **Vander-Heym, Roger**
**172 Boulevard Voltaire**
**F-75011 Paris(FR)**

(54) **Dispositif de sécurité pour pare-brise d'automobiles.**

(57) Un film en polyester transparent, découpé de façon à ne pas recouvrir tout le pare-brise, est collé sur la face interne de ce dernier, devant la tête du conducteur. Une pièce identique peut être placée devant celle du passager.

EP 0 019 556 A1

Croydon Printing Company Ltd.

La présente invention concerne un dispositif de sécurité pour pare-brise d'automobiles.

Les pare-brise d'automobiles sont en général, fabriqués soit en verre trempé, soit en verre dit feuilleté.

Les pare-brise en verre trempé équipent la plupart des véhicules. Lors d'accident, le verre se casse en petits morceaux et hache la chair du visage nécessitant des greffes ; les yeux ne sont pas épargnés et des dizaines de milliers de personnes perdent la vue tous les ans. En outre, en cas de choc le pare-brise devient opaque.

Les pare-brise feuilletés sont fabriqués à l'aide de deux verres ordinaires collés de part et d'autre d'une feuille de matière plastique souple en butyral.

Ces pare-brise sont aussi dangereux en cas d'accident car le premier verre coté passager est coupant; le seul avantage est que les coupures au visage sont plus franches et évitent les greffes mais les yeux sont aussi souvent blessés. Le véritable avantage réside en ce qu'en cas de choc le pare-brise reste en partie transparent ce qui permet au conducteur de continuer à rouler. Il y a beaucoup d'accidents automobile en ville et la place à côté du chauffeur est la plus dangereuse.

Il est connu que de nouveaux pare-brise sont munis du coté du conducteur d'une feuille de matière plastique pour éviter les coupures. Ces feuilles sont contre collées en usine en général à chaud pour pouvoir être appliquées sur les pare-brise souvent galbés dans les deux sens. Ces pare-brise sont destinés à être montés en usine par les fabricants d'automobiles. Le parc de véhicules roulants est très important et il n'est pas question de changer les pare-brise car le coût serait trop élevé. Tous les jours des personnes perdent la vue ou sont défigurées.

La présente invention a pour but de remédier aux inconvénients précités.

On connaît des films en polyester auto-adhésifs pour arrêter les ultraviolet et transformer le verre ordinaire en verre de sécurité. Il s'agit d'appliquer un disque de film polyester transparent auto collant à l'intérieur du pare-brise du véhicule à équiper coté passager, coté chauffeur ou les deux.

La forme géométrique ronde ou ovale permet de s'adapter sur tous pare-brise : plats, cylindriques ou galbés dans les deux sens et ceci sans faire de plis. Le film en polyester utilisé est un film transparent simple ou multi-couches de vingt cinq à cent microns d'épaisseur muni dans sa masse d'un anti-ultraviolet afin de conserver sa transparence dans le temps et éviter le vieillissement.

L'adhésif est de base acrylique solvant et muni d'un anti-ultraviolet dans sa masse. Cet adhésif est protégé par une couche de papier silicone ou de matière plastique destinée à être jetée au moment de la pose. La pose s'effectue en pulvérisant de l'eau comportant ou non un détergent pour neutraliser l'adhésif quelques minutes et éviter les plis, il suffit alors d'appliquer le film ( après avoir enlevé la protection) sur le pare-brise, de pulvériser de l'eau savonneuse et d'appliquer fortement à l'aide d'une raclette, l'eau est évacuée par capillarité en quelques heures et l'adhésif s'accroche au verre.

En cas d'accident, le passager s'il est projeté sur le pare-brise, n'aura ni coupure au visage ni poudre de verre dans les yeux. Il est important en cas de choc très violent de ne pas bloquer le passager sur le pare-brise ceci afin d'éviter les fractures du crane; il faut amortir le choc. Si le passager passe à travers le pare-brise, la feuille de polyester découpée en forme de rond, épousera la forme de la tête et éviterales blessures.

Dans le cas où une pierre frappe un pare-brise, le cercle de film transforme l'onde de choc et un pare-brise trempé reste en partie transparent ce qui permet au conducteur de se diriger au lieu de freiner brutalement et de provoquer d'autres accidents par télescopage.

Il est imprimé soit sur le film ou support ou l'emballage différents diamètres correspondant à la plupart des pare-brise ;l'utilisateur se sert de l'impression comme gabarit pour découper le cercle du diamètre qui convient à son véhicule.

. Naturellement, le film polyester peut être placé sur les glaces latérales.

REVENDICATIONS

1-Dispositif de sécurité pour pare-brise d'automobiles, caractérisé en ce qu'il est constitué par un film en polyester transparent , découpé de façon à ne pas recouvrir tout le pare-brise et collé sur la face interne de ce dernier devant la tête du conducteur, une pièce identique pouvant être placée devant celle du passager.

2-Dispositif de sécurité pour pare-brise d'automobiles, selon la revendication 1, caractérisé en ce que le film comporte dans sa masse un produit anti-ultraviolet.

3-Dispositif de sécurité pour pare-brise d'automobiles, selon l'une quelconque des revendications 1 et 2, caractérisé en ce que le film de polyester découpé est revêtu sur une face d'un adhésif de base acrylique solvant renfermant dans sa masse un produit anti-ultraviolet.

4-Dispositif de sécurité pour pare-brise d'automobiles, selon l'une quelconque des revendications 1 à 3, caractérisé en ce que le film est découpé sous la forme d'un disque dont le diamètre est sensiblement égal à la hauteur du pare-brise.

5-Dispositif de sécurité pour pare-brise d'automobiles, selon la revendication 4, caractérisé en ce que le disque a un contour circulaire ou ovale.

6-Dispositif de sécurité pour pare-brise d'automobiles, selon l'une quelconque des revendications 1 à 5, caractérisé en ce que l'épaisseur du film est comprise entre vingt cinq et cent microns.

7-Dispositif de sécurité pour pare-brise d'automobiles, selon l'une quelconque des revendications 1 à 6, caractérisé en ce que l'adhésif est protégé par une feuille de papier amovible aux silicones.

8-Dispositif de sécurité pour pare-brise d'automobiles, selon l'une quelconque des revendications 1 à 7, caractérisé en ce que les contours des différentes dimensions possibles du disque, en fonction du pare-brise, sont imprimés concentriquement sur le support du film.

**Office européen des brevets**

## RAPPORT DE RECHERCHE EUROPEENNE

EP 80 40 0688.0

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 2 217 177 (V. RIVALS)<br>* revendications * | 1,2,8 |
| | DE - A - 2 343 559 (LIBBEY-OWENS-<br>FORD CO.)<br>* page 5, ligne 18 à page 6, ligne 3 * | 1,6 |
| | DE - B2 - 2 351 798 (F. AZARA)<br>* colonnne 3, ligne 12 à colonne 4,<br>ligne 2 * | 1 |
| | DE - B2 - 2 228 299 (SAINT-GOBAIN)<br>* colonne 2, lignes 20 à 25 * | 1 |
| | DE - B - 1 530 504 (COMPAGNIE DE SAINT-<br>GOBAIN)<br>* revendication 1 * | 1 |

**CLASSEMENT DE LA DEMANDE (Int. Cl.3)**

B 60 J 1/02
B 60 J 1/20

**DOMAINES TECHNIQUES RECHERCHES (Int. Cl.3)**

B 32 B 17/00
B 60 J 1/00
B 60 R 21/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| Berlin | 04-08-1980 | BECKER |

OEB Form 1503.1 06.78